Europäisches Patentamt

European Patent Office

Office européen des brevets

(11) Veröffentlichungsnummer: **0 252 486 B1**

# EUROPÄISCHE PATENTSCHRIFT

(45) Veröffentlichungstag der Patentschrift: **29.05.91**

(51) Int. Cl.⁵: **C03B 37/012**, C03B 23/207

(21) Anmeldenummer: **87109761.4**

(22) Anmeldetag: **07.07.87**

(54) Verfahren zur Herstellung von Lichtwellenleitern.

(30) Priorität: **10.07.86 DE 3623213**

(43) Veröffentlichungstag der Anmeldung:
**13.01.88 Patentblatt 88/02**

(45) Bekanntmachung des Hinweises auf die
Patenterteilung:
**29.05.91 Patentblatt 91/22**

(84) Benannte Vertragsstaaten:
**DE ES FR GB IT NL**

(56) Entgegenhaltungen:
EP-A- 0 153 619
US-A- 4 157 906

Patent Abstracts of Japan, Bd.10, Nr.390
(C394)(2447), 26.12.1986

Patent Abstracts of Japan, Bd.10, Nr.276
(C-373)(2332),19.09.1986

Patent Abstracts of Japan, Bd.11, Nr.315
(C451)(2762), 14.10.1987

(73) Patentinhaber: **kabelmetal electro GmbH**
**Kabelkamp 20**
**W-3000 Hannover 1(DE)DE**

Patentinhaber: **ALCATEL N.V.**
**Strawinskylaan 537 (World Trade Center)**
**NL-1077 XX Amsterdam(NL)ES FR GB IT NL**

(72) Erfinder: **Dorn, Reimund, Dr.**
**Peter-von-Koblenz-Strasse 31**
**W-7141 Schwieberdingen(DE)**
Erfinder: **Köbke, Stefan**
**Blumenstrasse 20**
**W-7145 Markgröningen(DE)**
Erfinder: **Baumgärtner, Armin, Dr.**
**Heutingsheimer Strasse 26**
**W-7140 Ludwigsburg(DE)**

(74) Vertreter: **Mende, Eberhard, Dipl.-Ing. et al**
**kabelmetal electro GmbH Kabelkamp 20**
**Postfach 260**
**W-3000 Hannover 1(DE)**

## Beschreibung

Die Erfindung betrifft ein Verfahren zur Herstellung von Lichtwellenleitern nach dem Oberbegriff des Patentanspruchs 1.

Ein derartiges Verfahren ist bekannt aus der EP-A2-0 153 619. Bei diesem Verfahren wird durch Einfüllen von pulverförmigem Glasausgangsmaterial in eine Form und anschließendes Stabilisieren eine poröse Vorform hergestellt, diese anschließend gesintert und die durch das Sintern entstehende glasige Vorform zum Lichtwellenleiter ausgezogen.

Für die Weiterverarbeitung der porösen Vorform ist es nützlich, irgendeine Art von Halterung an der Vorform anzubringen.

Für poröse Vorformen, die nach dem bekannten Verfahren der Dorn-Außenbeschichtung und anschließende Entfernung des Dorns hergestellt werden, ist es aus der DE-C2 29 06 070 bekannt, ein Rohrstück aus Kieselglas als Halterung dadurch an einem Ende der porösen Vorform zu befestigen, daß man es an gegenüberliegenden Seiten mit Höckern versieht und durch Einführen in das Loch der porösen Vorform und Drehen um 90° darin verankert.

Die Stabilität dieser Art von Befestigung ist unzureichend. Es ist die Aufgabe der Erfindung, das Verfahren der eingangs genannten Art hinsichtlich des Anbringens einer geeigneten Halterung an die poröse Vorform weiterzubilden.

Die Aufgabe wird wie im Patentanspruch 1 angegeben gelöst. Weiterbildungen sind den Unteransprüchen entnehmbar.

Die Erfindung wird nun anhand der Zeichnungen beispielsweise näher erläutert. Es zeigen:

    Fig. 1     den Verfahrensschritt des Einführens eines Kieselglasstabs in ein am Ende der porösen Vorform vorhandenes Loch

    Fig. 2     den Verfahrensschritt des Eindrückkens des an seinem Befestigungsende erweichten Kieselglasstabs in das Loch zum Einschmelzen darin.

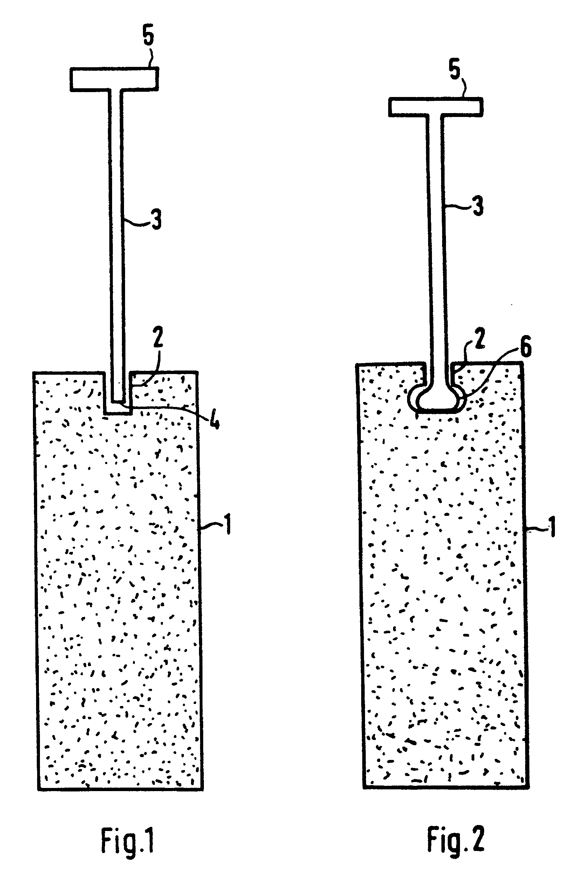

In Fig. 1 ist mit dem Bezugszeichen 1 die poröse Vorform bezeichnet, die die Form eines kreisrunden Stabes hat und die zum Lichtwellenleiter weiterzuverarbeiten ist. Damit an dieser Vorform in der noch zu erläuternden erfindungsgemäßen Weise eine Halterung befestigt werden kann, ist sie an ihrem einen Ende vorzugsweise in der Mitte ihres kreisförmigen Querschnitts mit einem Loch 2 versehen, dessen Tiefe relativ zur Länge der Vorform gering ist. Beispielsweise hat das Loch eine Tiefe von 1 cm und einen Querschnitt von 6mm, wenn die poröse Vorform eine Länge von 20 cm und einen Durchmesser von 45mm hat.

Es gibt mehrere Möglichkeiten, um die Vorform mit einem solchen Loch zu versehen. Entweder kann das Loch nach der Herstellung der stabförmigen porösen Vorform durch Bohren oder durch Ätzen erzeugt werden oder es kann bereits bei der Herstellung der porösen Vorform erzeugt werden, indem entsprechend der Form des gewünschten Loches Material ausgespart wird.

Als Halterung ist ein Stab 3 aus Kieselglas vorgesehen, dessen eines Ende 4, wie die Fig. 1 zeigt, in das Loch eingeführt und darin erfindungsgemäß befestigt wird und an dessen anderem Ende ein Griff 5 befestigt ist. Der Stab ist vorzugsweise, entsprechend der Querschnittsform des Loches 2, kreisrund und hat bei dem angegebenen Lochdurchmesser von 6mm einen Durchmesser von 4mm. Statt eines Stabs kann selbstverständlich auch ein Rohr aus Kieselglas verwendet werden.

Bevor der Kieselglasstab in das Loch 2 eingeführt wird, wird er an seinem einzuführenden Ende 4 soweit erhitzt, daß er erweicht. Dann wird er, was die Fig. 2 zeigt, derart auf den Boden des Loches gedrückt, daß sich sein erweichtes Ende verbreitert. Dabei wird das an das heiße, erweichte und verbreiterte Ende angrenzende poröse Material der ursprünglichen Lochwand in deren unterem Teil gesintert, so daß sich das Loch in diesem unteren Teil ausdehnt. In den ausgedehnten Teil des Loches dringt das glasige Material des erweichten und verbreiterten Kieselglasstabs ein, in anderen Worten: Er dringt in einen an das ursprüngliche Loch angrenzenden Bereich der porösen Vorform 1 ein.

Die Fig. 2 zeigt diesen Zustand, bei dem das in das Loch 2 hineingedrückte Ende des Stabes 3 sich zu einer Kugel oder einem ähnlichen Gebilde verformt hat und sich dadurch in der porösen Vorform 1 verankert. Die Verankerung ist dadurch bewirkt, daß die Kugel 6 eine breitere Ausdehnung als der obere Rand des Loches 2 hat und daher, nachdem sie erkaltet und erstarrt ist, nicht mehr aus dem Loch herausziehbar ist. Der Stab ist dabei meistens an seinem unteren Teil an die poröse Vorform angeschmolzen, d. h. in das Loch eingeschmolzen. Die Verankerung hält aber auch dann noch, wenn diese Schmelzverbindung wieder auseinanderbricht.

Mit diesem an der Vorform befestigten Stab als Halterung, geschieht dann die weitere Verarbeitung der porösen Vorform 1, d. h. vorwiegend das Überführen in eine glasige Vorform durch Sintern und das anschließende Ausziehen der glasigen Vorform zum Lichtwellenleiter. Der obere Teil der Vorform, in dem der Kieselglasstab unlösbar befestigt ist, kann bei diesem Verfahren nicht zu einem Lichtwellenleiter verarbeitet werden, da das ursprünglich in der Mitte der Vorform vorhandene Kernmaterial in diesem Bereich nicht vorhanden oder durch das Material des Stabs ersetzt ist, das in Ausdehnung und Zusammensetzung normalerweise von dem Kernmaterial abweicht und daher unbrauchbar ist.

Statt des vorstehend beschriebenen Verfahrens, bei dem der Stab durch einen kombinierten Stauch-, Sinter- und Schmelzvorgang in der porösen Vorform verankert wird, ist es auch möglich, den Kieselglasstab oder das Kieselglasrohr durch Einkleben mittels eines für Kieselglas geeigneten Klebemittels in dem Loch zu befestigen, was ebenfalls eine unlösbare Verbindung ergibt.

Bei den vorstehend angegebenen Abmessungen der porösen Vorform und des Loches hat der als Halterung verwendete Stab 3 beispielsweise eine Länge von 20 cm.

## Ansprüche

1. Verfahren zum Herstellen von Lichtwellenleitern, bei dem eine poröse, stabförmige Vorform (1) hergestellt wird, diese in eine glasige Vorform überführt und die glasige Vorform zum Lichtwellenleiter weiterverarbeitet wird, **dadurch gekennzeichnet,** daß die poröse stabförmige Vorform bei oder nach ihrer Herstellung in ihrer Querschnittsmitte mit einem Loch versehen wird, dessen Tiefe bezogen auf die Länge der Vorform gering ist, und daß in dieses Loch ein Stab oder Rohr (3) aus Kieselglas als Halterung für die Weiterverarbeitung der porösen Vorform (1) eingeschmolzen oder eingeklebt wird.

2. Verfahren nach Anspruch 1, dadurch gekennzeichnet, daß das Loch durch Bohren erzeugt wird.

3. Verfahren nach Anspruch 1, dadurch gekennzeichnet, daß das Loch durch Aussparen von Material bei der Herstellung der porösen Vorform erzeugt wird.

4. Verfahren nach Anspruch 1, dadurch gekennzeichnet, daß das Loch durch Ätzen erzeugt wird.

5. Verfahren nach einem der vorstehenden Ansprüche, dadurch gekennzeichnet, daß der Stab (3) oder das Rohr aus Kieselglas an seinem einen Ende (4) bis zum Erweichen erhitzt wird und dann dieses erweichte Ende so in das Loch (2) hineingedrückt wird, daß es sich darin verbreitert und im unteren Teil des Loches über die ursprüngliche Lochwand hinaus ausdehnt und sich dadurch im Loch verankert.

## Claims

1. Process for producing optical waveguides, in which a porous, rod-like preform (1) is produced and converted into a glassy preform, and the glassy preform is further processed to produce the optical waveguide, characterised in that the porous, rod-like preform is provided at the centre of its cross-section, during or after its production, with a hole whose depth is small relative to the length of the preform, and in that a rod or tube (3) of silica glass is fused or cemented into said hole as a holding device for the further processing of the porous preform (1).

2. Process according to Claim 1, characterised in that the hole is produced by drilling.

3. Process according to Claim 1, characterised in that the hole is produced by cutting out material during the production of the porous preform.

4. Process according to Claim 1, characterised in that the hole is produced by etching.

5. Process according to one of the preceding claims, characterised in that the rod (3) or the tube of silica glass is heated at one of its ends (4) until it softens and this softened end is then pressed into the hole (2) in such a way that it spreads out therein and expands beyond the original hole wall in the lower part of the hole and thus becomes anchored in the hole.

## Revendications

1. Procédé pour la fabrication de guides d'ondes lumineuses dans lequel on fabrique une préforme (1) poreuse en forme de barreau, on transforme cette préforme en préforme vitreuse, et on transforme la préforme vitreuse en guides d'ondes lumineuses caractérisé en ce que la préforme poreuse en forme de barreau est munie d'un trou au milieu de sa section transversale pendant ou après sa fabrication, la profondeur du trou étant faible vis-à-vis de la longeur de la préforme et en ce qu'une tige ou un tube (3) de verre de silice est fondue ou collée dans le trou pour servir de support lors du travail ultérieur de la préforme (1) poreuse.

2. Procédé selon la revendication 1, caractérisé en ce que le trou est formé par forage.

3. Procédé selon la revendication 1, caractérisé en ce que le trou est formé par évidement du matériau lors de la fabrication de la préforme poreuse.

4. Procédé selon la revendication 1, caractérisé en ce que le trou est formé par décapage.

5. Procédé selon l'une des revendications précédentes, caractérisé en ce que la tige (3) ou tube de silice est chauffé à l'une de ses extrémités jusqu'à ramollissement et que cette extrémité ramollie est introduite dans le trou de telle sorte qu'elle s' élargit et que, dans la partie inférieure du trou, elle s'appuie sur la paroi initiale du trou et s'ancre de ce fait dans le trou.

Fig.1

Fig.2